# DEMANDE DE BREVET EUROPEEN

(11) **EP 2 868 539 A1**
(43) Date de publication de la demande: **06.05.2015**
(21) Numéro de dépôt: 14190899.6
(22) Date de dépôt: 29.10.2014
(51) Int. Cl.: B60S 1/38, B60S 1/52

(54) **Corps longitudinal pour un balai d'essuyage d'une vitre de véhicule**

(30) Priorité: 30.10.2013 FR 1360646
(71) Demandeur: Valeo Systèmes d'Essuyage, 78321 Le Mesnil Saint Denis (FR)
(72) Inventeur: Cros, Lionel, 63670 LA ROCHE BLANCHE (FR)
(74) Mandataire: Callu Danseux, Violaine

(57) **Abrégé**

Corps longitudinal (114) pour balai d'essuyage d'une vitre de véhicule, en particulier automobile, ledit corps longitudinal (114) étant formé d'une seule pièce avec des moyens (140, 142) de maintien d'une lame d'essuyage et/ou de retenue d'une vertèbre de rigidification, lesdits moyens définissant au moins un logement (144, 145) de réception de la vertèbre ou d'un talon de la lame d'essuyage, caractérisé en ce que ledit corps (114) définit au moins une cavité interne longitudinale (146) qui s'étend en dehors dudit logement (144, 145), ladite cavité (146) étant coupée par un plan P passant par des parois verticales (142') délimitant ledit logement.

## Description

### DOMAINE TECHNIQUE

La présente invention concerne un corps longitudinal pour un balai d'essuyage d'une vitre de véhicule, en particulier automobile, ainsi qu'un balai d'essuyage comportant un tel corps.

### ETAT DE L'ART

Typiquement, un balai d'essuyage d'une vitre telle que le pare-brise d'un véhicule automobile comprend un corps longitudinal et des moyens de maintien d'une lame d'essuyage, en général en caoutchouc, destinée à frotter contre la vitre du véhicule pour évacuer de l'eau en l'amenant en dehors du champ de vision du conducteur. Le balai comporte en outre des moyens de retenue d'une vertèbre longitudinale qui rigidifie la lame d'essuyage, de manière à favoriser l'application de cette lame sur le pare-brise. Le balai est porté par un bras qui est entraîné par un moteur dans un mouvement de va-et-vient angulaire. Les moyens de liaison du balai au bras comprennent en général un connecteur qui est solidaire du corps et un adaptateur qui est articulé sur le corps et fixé à une extrémité du bras.

On a déjà proposé de former d'une seule pièce le corps, les moyens de maintien de la lame d'essuyage, et les moyens de retenue de la vertèbre de rigidification, pour simplifier la fabrication du balai.

Cependant, l'inconvénient majeur des balais de ce type de la technique actuelle est que leurs corps ne sont pas suffisamment flexibles ce qui nuit à l'efficacité de l'essuyage du pare-brise. Ce problème est accentué en période hivernale car le froid limite les capacités de flexion de ces balais.

L'invention propose une solution simple, efficace et économique à ce problème.

### EXPOSE DE L'INVENTION

L'invention propose un corps longitudinal pour balai d'essuyage d'une vitre de véhicule, en particulier automobile, ledit corps longitudinal étant formé d'une seule pièce avec des moyens de maintien d'une lame d'essuyage et/ou de retenue d'une vertèbre de rigidification, lesdits moyens définissant au moins un logement de réception de la vertèbre ou d'un talon de la lame d'essuyage, ledit logement étant délimité au moins en partie par une paroi horizontale et deux parois verticales, lesdites parois verticales étant respectivement de longueur inférieure à ladite paroi horizontale vues en section transversale, caractérisé en ce que ledit corps définit au moins une cavité interne longitudinale qui s'étend en dehors dudit logement, ladite cavité étant coupée par un plan longitudinal P, P' passant par lesdites parois verticales.

Dans la présente demande, on entend par cavité interne une cavité qui est située à l'intérieur du corps du balai. Lesdits moyens comprennent des premiers moyens de maintien d'une lame d'essuyage et/ou des seconds moyens de retenue d'une vertèbre de rigidification. Ces moyens définissent au moins un logement délimité au moins en partie par une paroi horizontale et deux parois verticales, ces dernières pouvant être sensiblement perpendiculaires à la paroi horizontale ou inclinées par rapport à celle-ci. Les moyens de maintien et/ou de retenue peuvent par exemple consister en un collage de la lame d'essuyage et/ou de la vertèbre de rigidification sur une ou plusieurs desdites parois horizontale et verticales. Plus préférablement, les moyens de maintien de la lame d'essuyage et/ou de retenue de la vertèbre de rigidification comprennent respectivement des crochets longitudinaux de maintien de la lame et/ou de retenue de la vertèbre, ces crochets délimitant ledit logement de réception de la vertèbre et/ou d'un talon de la lame d'essuyage, avec ladite paroi horizontale et lesdites parois verticales.

La présence de la ou des cavités internes permet de réduire la rigidité du corps et donc de le rendre plus flexible, ce qui permet d'améliorer l'efficacité de l'essuyage, même en hiver. Selon l'invention, ces cavités sont coupées par le plan longitudinal P, P' passant par les parois verticales délimitant le logement de réception de la vertèbre ou du talon de la lame. Elles sont ainsi sensiblement situées sur les côtés du corps, ce qui peut se traduire par une augmentation de la largeur du corps par rapport à ceux des balais de la technique antérieure.

Dans la technique antérieure, la vertèbre de rigidification peut être montée avec des jeux latéraux dans le corps du balai, qui définissent des espaces longitudinaux. Ces espaces ne définissent pas des cavités au sens de l'invention car ils ne sont pas situés en dehors du logement de réception de la vertèbre. Ils ne sont pas conçus pour optimiser la flexibilité du corps mais seulement pour faciliter le montage par coulissement de la vertèbre dans son logement.

Selon un mode préféré de réalisation de l'invention, ladite au moins une cavité longitudinale s'étend de part et d'autre desdits moyens de maintien d'une lame d'essuyage et/ou de retenue d'une vertèbre de rigidification.

Les moyens précités de maintien et de retenue peuvent définir un premier logement de réception de la vertèbre et un second logement de réception du talon de la lame, ladite au moins une cavité s'étendant sur au moins toute la hauteur de l'un desdits logements et éventuellement sur au moins une partie de la hauteur de l'autre desdits logements. La hauteur de chaque logement est mesurée dans une direction sensiblement perpendiculaire au plan P, P'. La flexibilité du corps peut notamment être fonction de cette hauteur.

La ou chaque cavité peut avoir en section transversale une base ou extrémité inférieure de plus grande largeur que son sommet ou extrémité supérieure.

Les moyens de maintien et/ou de retenue du corps peuvent comprendre au moins deux crochets longitudinaux. De préférence, ladite au moins une cavité s'étend au moins en partie entre l'un de ces crochets et une paroi latérale du corps. Chaque paroi latérale peut avoir en section transversale une forme sensiblement en U, C ou V, dont l'ouverture est orientée vers une paroi latérale opposée du corps.

Avantageusement, le corps du balai présente un plan longitudinal U de symétrie sensiblement perpendiculaire au plan P, P'.

La paroi ou partie de la périphérie extérieure du corps, qui borde ladite au moins une cavité, peut former un déflecteur aérodynamique. Avantageusement, le déflecteur aérodynamique est formé dans un matériau à base d'élastomère(s) dont la dureté Shore-A est comprise entre 70 et 83.

Le corps du balai peut être réalisé à partir d'un ou deux matériaux, notamment à base d'élastomère(s), et par exemple par extrusion ou co-extrusion. Un corps bi-matière peut permettre de faciliter l'optimisation de sa flexibilité. Par exemple, le corps du balai peut comprendre une partie supérieure plus souple ou moins dure que celui de sa partie inférieure. La partie supérieure est de préférence suffisamment rigide pour faciliter sa découpe pour former un logement de réception du connecteur du balai, en évitant le risque d'affaissement du corps lors de la réalisation de cette découpe.

Selon un mode de réalisation, le logement de réception de la vertèbre communique avec ladite au moins une cavité.

En variante, ladite au moins une cavité est isolée dudit logement de réception de la vertèbre et est configurée pour être alimentée en liquide lave glace. L'isolation de la ou des cavités signifie qu'elles ne communiquent pas avec le logement de réception de la vertèbre défini par les moyens de retenue. La ou les cavités forment ainsi des moyens de circulation de liquide lave-glace qui sont logés dans le corps du balai et non pas rapportés sur celui-ci, ce qui simplifie le corps et évite de l'élargir davantage.

Dans ce dernier cas, le corps du balai peut comprendre, par exemple au niveau de ses parois latérales, des orifices de pulvérisation de liquide lave glace, qui débouchent dans ladite au moins une cavité.

Les moyens précités peuvent comprendre des crochets de retenue de la vertèbre, au moins un crochet de retenue de la vertèbre, de préférence chaque crochet de retenue de la vertèbre, étant relié à une paroi supérieure ou latérale du corps par au moins un voile longitudinal d'isolation de ladite au moins une cavité. Ce voile peut être réalisé lors de la fabrication du corps, par exemple par extrusion ou co-extrusion.

Le corps du balai peut avoir en section transversale une forme présentant deux parties, respectivement supérieure et inférieure, la partie supérieure étant sensiblement triangulaire et la partie inférieure étant sensiblement trapézoïdale ou hexagonale. De préférence, ladite partie supérieure est plus souple ou moins dure que ladite partie inférieure.

L'invention concerne encore un corps longitudinal tel que décrit ci-dessus, dans lequel ladite au moins une cavité longitudinale présente un contour de forme sensiblement identique en section transversale à la périphérie extérieure du corps.

La présente invention concerne également un balai d'essuyage d'une vitre de véhicule, comprenant un corps longitudinal tel que décrit ci-dessus, une lame d'essuyage et une vertèbre de rigidification, ladite lame ou ladite vertèbre étant reçue dans ledit logement.

Le balai d'essuie-glace peut comprendre un unique corps, dans lequel est par exemple ménagée au moins une découpe destinée à servir de logement pour un connecteur intermédiaire.

Dans une variante de réalisation le corps du balai est réalisé en plusieurs parties indépendantes, par exemple entre deux et dix parties, qui sont disposées sensiblement bout à bout longitudinalement, en particulier raccordées l'une à l'autre par un connecteur intermédiaire comprenant des moyens de fixation à ces parties.

Le corps du balai, voire chaque partie indépendante, présente par exemple une longueur supérieure à 100 mm.

La présente invention concerne enfin un système d'essuyage d'une vitre de véhicule, en particulier automobile, comportant au moins un balai tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue en perspective éclatée d'un système d'essuyage selon l'art antérieur,
- la figure 2 est une vue schématique en coupe transversale d'un corps longitudinal pour balai d'essuyage selon l'invention, et
- les figures 3 à 7 sont des vues schématiques en coupe transversale de corps longitudinaux pour balais d'essuyage selon des variantes de réalisation de l'invention.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuyage selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur un bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

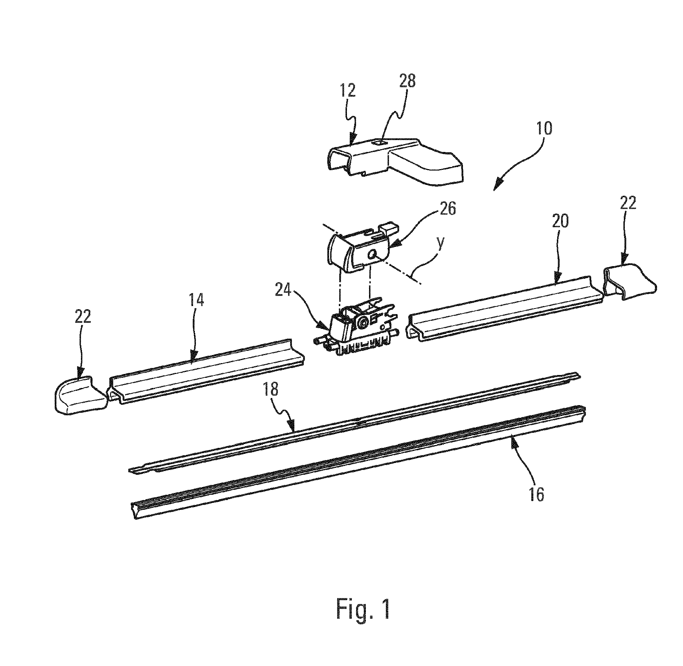

Il est illustré à la figure 1 un système selon l'art antérieur d'essuyage d'un pare-brise de véhicule, en particulier automobile. Ce système comprend un balai 10 d'essuyage du pare-brise et un bras 12 porte-balai qui est partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un corps longitudinal 14, une lame d'essuyage 16, en général en caoutchouc, et au moins une vertèbre 18 qui rigidifie la lame 16 et favorise sont application sur le pare-brise.

Le corps 14 du balai 10 comporte un déflecteur aérodynamique supérieur 20 destiné à améliorer le fonctionnement du système d'essuyage, le but de ce déflecteur 20 étant d'améliorer le plaquage du balai sur le pare-brise et donc la performance aérodynamique du système.

Le balai 10 comprend en outre des embouts ou agrafes d'accrochage 22 de la lame 16 et de la vertèbre 18 sur le corps, ces agrafes 22 étant situées à chacune des extrémités longitudinales du corps 14.

Le corps 14 du balai est ici réalisé en deux parties indépendantes qui sont disposées sensiblement bout à bout et raccordées l'une à l'autre par un connecteur 24 intermédiaire. Ce connecteur 24 est donc intercalé entre les deux parties du corps 14 et comprend des moyens de fixation à ces parties. L'invention doit s'entendre comme concernant également un balai d'essuie-glace comprenant un unique corps 14, dans lequel est ménagée une découpe destinée à servir de logement pour un connecteur 24 intermédiaire (variante non représentée).

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

L'invention concerne un type particulier de balai d'essuyage selon lequel le corps 14 est formé d'une seule pièce avec des moyens de retenue de la vertèbre 18 et/ou des moyens de maintien de la lame d'essuyage 16.

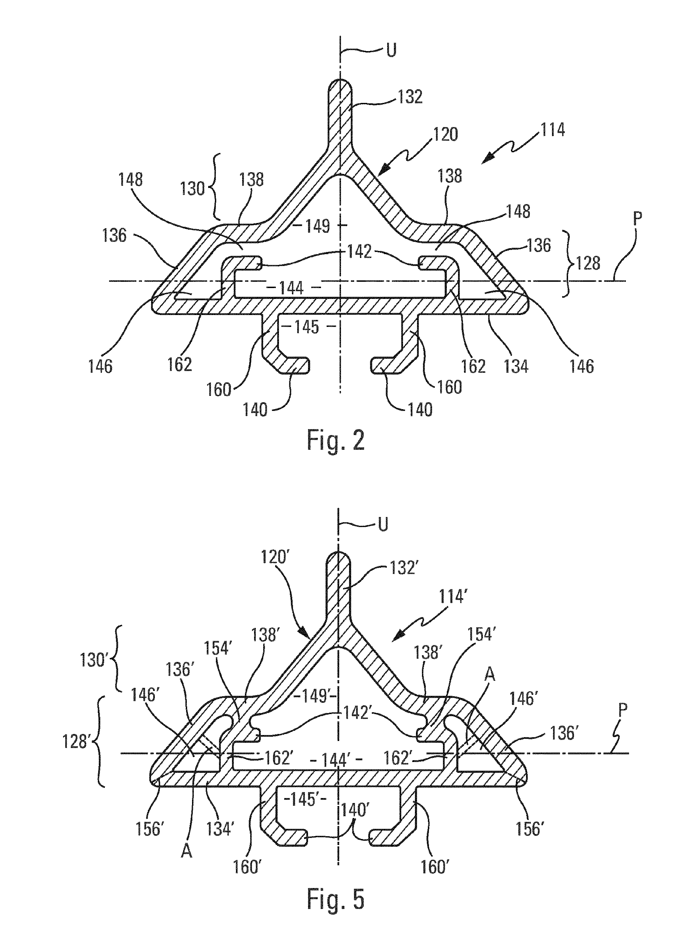

Les figures 2 à 7 représentent plusieurs variantes de réalisation d'un corps longitudinal de balai d'essuyage selon l'invention, ce corps étant ici formé d'une seule pièce avec des moyens de maintien d'une lame d'essuyage, des moyens de retenue d'une vertèbre de rigidification, ainsi que d'un déflecteur aérodynamique.

Les éléments déjà décrits dans ce qui précède sont désignés dans ce qui suit par les mêmes chiffres de référence augmentés d'au moins une centaine. Ainsi, les références 114 et 120 de la figure 2 désignent respectivement le corps et le déflecteur du balai selon l'invention.

Dans le mode de réalisation de la figure 2, le corps 114 est réalisé en une seule pièce et en un seul matériau, par exemple par extrusion.

Le corps 114 a en section une forme présentant sensiblement deux parties, respectivement inférieure 128 et supérieure 130. La partie supérieure 130 comprend le déflecteur 120. Ce déflecteur 120 a ici en section une forme de triangle ou de dièdre dont le sommet ou extrémité supérieure est relié à une nervure longitudinale 132 sensiblement verticale. Ce dièdre comprend deux parois latérales inclinées, respectivement avant et arrière, formant un angle compris entre 10 et 120°, de préférence compris entre 20 et 100°, plus préférablement entre 40 et 100°, encore plus préférablement entre 60 et 100°. L'angle représenté est ici sensiblement compris entre 80 et 90°.

La partie inférieure 128 du corps a une forme générale trapézoïdale dont la grande base forme l'extrémité inférieure et dont la petite base est située du côté de la partie supérieure 130. Cette partie inférieure 128 comprend une paroi horizontale inférieure 134 sensiblement plane, qui définit la grande base précitée, et qui est reliée par ses bords longitudinaux latéraux aux bords longitudinaux inférieurs de deux parois longitudinales latérales 136, respectivement. Ces parois latérales 136 sont inclinées et leurs bords longitudinaux supérieurs sont reliés aux bords longitudinaux inférieurs des parois latérales de la partie supérieure 130 par l'intermédiaire de deux parois horizontales supérieures 138, respectivement, qui sont sensiblement parallèles à la paroi inférieure 134.

Les moyens de maintien de la lame comprennent ici deux premiers crochets longitudinaux latéraux 140 qui s'étendent vers le bas depuis la paroi inférieure 134. Chaque crochet 140 comprend une paroi verticale 160 dont le bord longitudinal supérieur est relié à la paroi inférieure 134 et dont le bord longitudinal inférieur est relié à un rebord horizontal orienté vers l'autre crochet 140. Ces premiers crochets 140 sont ainsi sensiblement parallèles et ont chacun en section une forme sensiblement en L. Ils définissent entre eux un logement 145 de réception d'un talon de la lame d'essuyage.

Les moyens de retenue de la vertèbre comprennent ici deux seconds crochets longitudinaux latéraux 142 qui s'étendent vers le haut depuis la paroi inférieure 134. Ces seconds crochets 142 sont sensiblement parallèles et ont chacun en section une forme sensiblement en L. Ils sont ici situés sous les parois supérieures 138, respectivement. Chaque crochet 142 comprend une paroi verticale 162 dont le bord longitudinal inférieur est relié à la paroi inférieure 134 et dont le bord longitudinal supérieur est relié à un rebord horizontal orienté vers l'autre crochet 142. On nomme P un plan longitudinal passant par les parois verticales 162, ici sensiblement à leur mi-hauteur en section transversale. Le plan géométrique P est ici sensiblement parallèle à la paroi inférieure 134.

Ces crochets 142 définissent entre eux un logement 144 de réception de la vertèbre. Comme cela est visible en figure 2, ce logement 144 a en section transversale une forme allongée dans le plan longitudinal P.

Les parois latérales 136 s'étendent à distance des crochets 142 et définissent avec ceux-ci une cavité longitudinale 146, qui s'étend ainsi de part et d'autre des moyens de retenue de la vertèbre, et qui est coupée par le plan P.

Les parois supérieures 138 s'étendent à distance des crochets 142 et définissent avec ceux-ci des passages longitudinaux 148. On peut constater que les portions de cavité 146, situées de chaque côté des moyens de retenue, communiquent avec le logement 144 et l'espace interne 149 définit par le déflecteur 120, par l'intermédiaire de ces passages 148.

Le corps 114 de la figure 2 présente un plan U de symétrie longitudinal sensiblement vertical.

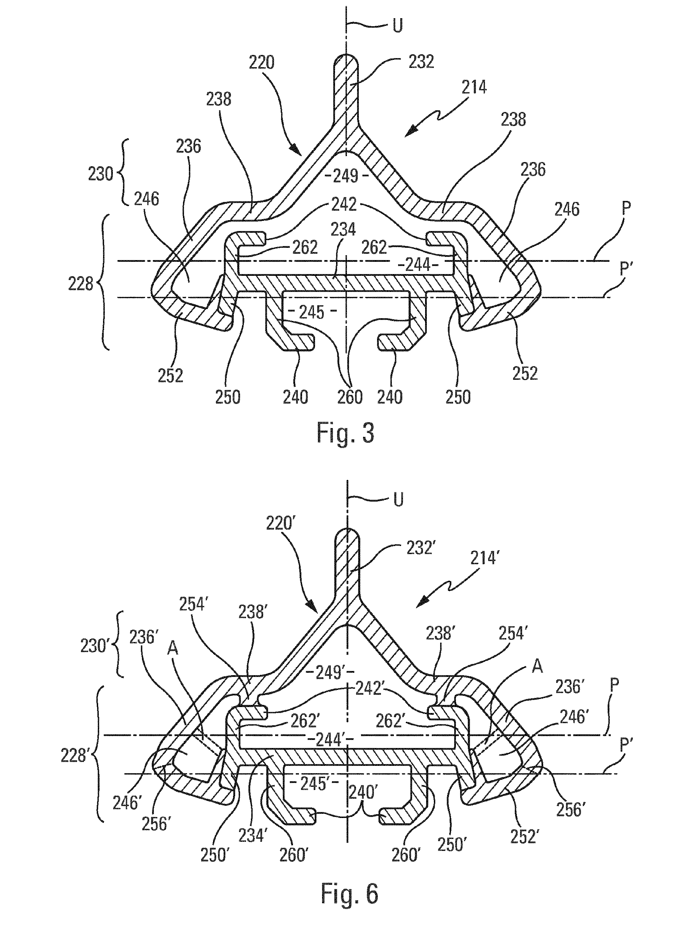

La variante de réalisation de la figure 3 diffère du précédent mode de réalisation notamment en ce que le corps 214 du balai est formé d'une seule pièce, par exemple par extrusion, à partir de deux matériaux différents, un premier matériau pour les crochets 240, 242 des moyens de maintien et de retenue, et un second matériau pour le reste du corps.

La cavité latérale 246 du corps 214 s'étend ici de part et d'autre des moyens de retenue (crochets 242) ainsi que de part et d'autre d'une partie supérieure des moyens de maintien (crochets 240).

Le corps 214 comprend ici une paroi horizontale inférieure 234 dont les bords longitudinaux latéraux sont chacun reliés d'une part au bord longitudinal inférieur d'un crochet 242 et d'autre part au bord longitudinal supérieur d'un rebord longitudinal 250 sensiblement vertical. Les crochets 240 s'étendent vers le bas depuis cette paroi inférieure 234. La paroi inférieure 234, les crochets 240, 242 et les rebords 250 sont réalisés dans le premier matériau.

Les bords longitudinaux inférieurs des parois latérales 236 du corps 214 sont reliés à des pattes latérales 252 qui s'étendent de chaque côté des moyens de maintien (crochets 240). Ces pattes 252, les parois latérales 236 et le reste de la partie supérieure du corps 214 sont réalisés dans le premier matériau. Les zones de liaison entre les deux matériaux sont ici situées entre les pattes 252 et les rebords 250.

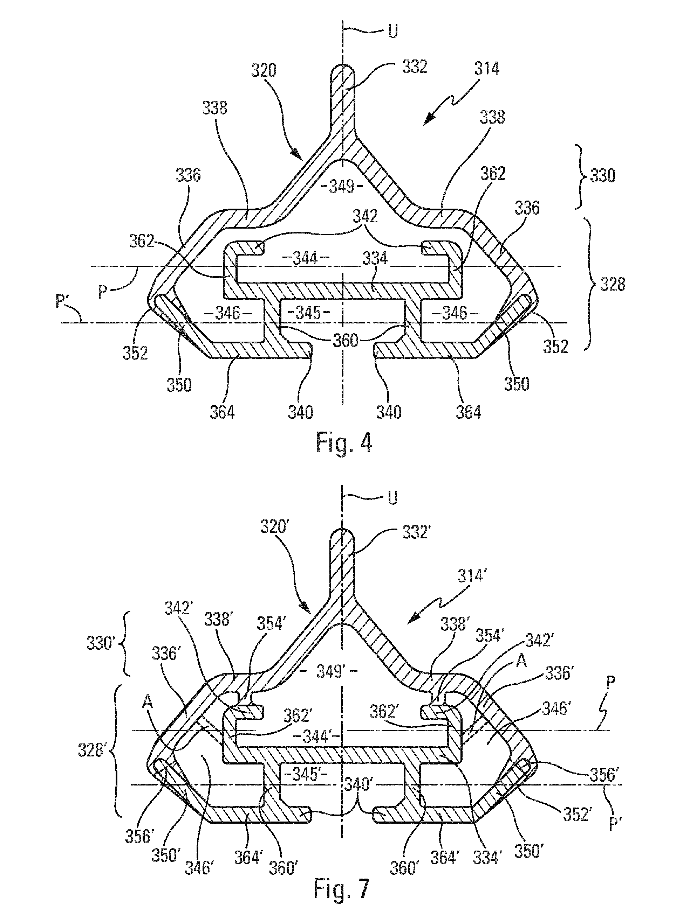

La variante de réalisation de la figure 4 diffère du précédent mode de réalisation notamment par la forme de la partie inférieure du corps 314, qui est ici sensiblement hexagonale, et par les zones de liaison des deux matériaux du corps. Par ailleurs, la cavité latérale 346 du corps 214 s'étend ici de part et d'autre des moyens de retenue (crochets 342) et des moyens de maintien (crochets 340), sur sensiblement toutes leurs hauteurs (mesurées dans une direction perpendiculaire au plan P).

Chaque crochet 340 est ici relié par son bord longitudinal inférieur à une paroi horizontale latérale 364 qui s'étend du côté opposé à l'autre crochet 340, et qui est reliée à son extrémité opposée à cet autre crochet à un rebord latéral 350 incliné vers le haut. Les parois inférieures 364, les crochets 340, 342 et les rebords 350 sont réalisés dans le premier matériau.

Les bords longitudinaux inférieurs des parois latérales 336 du corps 314 sont reliés à des pattes latérales 352 qui s'étendent de chaque côté des moyens de maintien (crochets 340). Les pattes 352, les parois latérales 336 et le reste de la partie supérieure du corps sont réalisés dans le second matériau. Les zones de liaison entre les deux matériaux sont ici situées entre les pattes 352 et les rebords 350. La forme hexagonale de la partie inférieure 328 du corps 314 provient notamment de l'inclinaison des parois latérales 336, des pattes 352 et des rebords 350.

La cavité 346 est ici coupée à la fois par le plan longitudinal P passant par les parois verticales 362 délimitant le logement 344 de réception de la vertèbre 18 et par le plan longitudinal P' passant par les parois verticales 360 délimitant le logement 345 de réception du talon de la lame 16.

Dans chacun des modes de réalisation des figures 2 à 4, le corps est relativement flexible du fait du nombre et de la localisation des zones de liaison de ses parties supérieure et inférieure. En effet, la partie supérieure 130, 230, 330 du corps est reliée à sa partie inférieure 128, 228, 328 uniquement par les parois latérales 136, 236, 336 du corps. Du fait de la flexibilité de ces parois latérales, le corps a une bonne flexibilité. Dans les variantes des figures 3 et 4, le matériau de la partie supérieure 230, 330 du corps peut être plus souple ou moins dur que celui de la partie inférieure 228, 328 de façon à augmenter davantage la flexibilité du corps.

La variante de réalisation de la figure 5 diffère du mode de réalisation de la figure 2 essentiellement en ce que chaque crochet 142' des moyens de retenue est relié par un voile longitudinal 154' de matière à la paroi supérieure 138' du corps 114', disposée directement au dessus de lui. Ces voiles 154' sont de préférence réalisés en même temps que le reste du corps 114', par exemple par extrusion.

Les voiles 154' permettent de délimiter deux cavités 146' indépendantes et de les isoler du reste de l'espace interne 149' du corps 114' et du logement 144', de façon à ce que ces cavités puissent être utilisées pour assurer la circulation d'un liquide lave glace par exemple. Dans ce cas, les parois latérales 136' et/ou la paroi inférieure 134' du corps peuvent comprendre des orifices 156' de pulvérisation de liquide lave glace, ces orifices 156' débouchant par l'une de leurs extrémités dans une des cavités 146'.

La variante de réalisation de la figure 6 diffère du mode de réalisation de la figure 3 essentiellement en ce que chaque crochet 242' des moyens de retenue est relié par un voile longitudinal 254' de matière à la paroi supérieure 238' du corps 214', disposée directement au dessus de lui. Ces voiles 254' sont de préférence réalisés en même temps que le reste du corps 214', par exemple par extrusion.

Les voiles 254' peuvent être réalisés dans le matériau des parois supérieures 238' ou dans celui des crochets 242'. Dans l'exemple représenté, ils sont formés dans le matériau des parois supérieures 238'. Les zones de liaison entre les deux matériaux sont ici situées entre les pattes 252' et les rebords 250' d'une part, et entre les voiles 254' et les crochets 242' d'autre part.

Les voiles 254' permettent de délimiter deux cavités 246' indépendantes et de les isoler du reste de l'espace interne 249' du corps 214' et du logement 244', de façon à ce que ces cavités puissent être utilisées pour assurer la circulation de liquide lave glace par exemple. Dans ce cas, les parois latérales 236' et/ou les pattes 252' du corps peuvent comprendre des orifices 256' de pulvérisation de liquide lave glace, ces orifices 256' débouchant par l'une de leurs extrémités dans une des cavités 246'.

La variante de réalisation de la figure 7 diffère du mode de réalisation de la figure 4 essentiellement en ce que chaque crochet 342' des moyens de retenue est relié par un voile longitudinal 354' de matière à la paroi supérieure 338' du corps 314', disposée directement au dessus de lui. Ces voiles 354' sont de préférence réalisés en même temps que le reste du corps 314', par exemple par extrusion.

Les voiles 354' peuvent être réalisés dans le matériau des parois supérieures 338' ou dans celui des crochets 342'. Dans l'exemple représenté, ils sont formés dans le matériau des parois supérieures 338'. Les zones de liaison entre les deux matériaux sont ici situées entre les pattes 352' et les rebords 350' d'une part, et entre les voiles 354' et les crochets 342' d'autre part.

Les voiles 354' permettent de délimiter deux cavités 346' indépendantes et de les isoler du reste de l'espace interne 349' du corps 314' et du logement 344', de façon à ce que ces cavités puissent être utilisées pour assurer la circulation de liquide lave glace par exemple. Dans ce cas, les parois latérales 336' et/ou les pattes 352' du corps peuvent comprendre des orifices 356' de pulvérisation de liquide lave glace, ces orifices 356' débouchant par l'une de leurs extrémités dans une des cavités 346'.

Les corps des variantes des figures 5 à 7 sont plus rigides que ceux des figures 2 à 4, du fait des voiles de liaison 154', 254', 354' des parties supérieure 130', 230', 330' et inférieure 128', 228', 328' des corps. La position de ces voiles peut être déterminée pour optimiser cette flexibilité. Les doubles traits pointillés A aux figures 5 à 7 illustrent d'autres positions pour ces voiles. La position de ces voiles dépend également du volume et/ou de la section de passage souhaités pour chaque cavité de circulation de liquide lave glace. Cette section de passage n'a pas forcément une forme circulaire comme représenté dans les dessins et peut avoir des dimensions, en largeur et en hauteur, comprise entre 1 et 5 mm environ, de préférence entre 2 et 4 mm environ, et plus préférentiellement entre 2,5 et 3,5 mm environ.

## Revendications

1. Corps longitudinal (114, 114', 214, 214', 314, 314') pour balai (10) d'essuyage d'une vitre de véhicule, en particulier automobile, ledit corps longitudinal étant formé d'une seule pièce avec des moyens de maintien (140, 140', 240, 240', 340, 340') d'une lame d'essuyage (16) et/ou de retenue (142, 142', 242, 242', 342, 342') d'une vertèbre de rigidification (18), lesdits moyens définissant au moins un logement (144, 144', 145, 145', 244, 244', 245, 245', 344, 344', 345, 345') de réception de la vertèbre (18) ou d'un talon de la lame d'essuyage (16), ledit logement (144, 144', 145, 145', 244, 244', 245, 245', 344, 344', 345, 345') étant délimité au moins en partie par une paroi horizontale (134, 134', 234, 234', 334, 334') et deux parois verticales (160, 160', 162, 162', 260, 260', 262, 262', 360, 360', 362, 362'), lesdites parois verticales étant respectivement de longueur inférieure à ladite paroi horizontale vues en section transversale, **caractérisé en ce que** ledit corps définit au moins une cavité interne longitudinale (146, 146', 246, 246', 346, 346') qui s'étend en dehors dudit logement (144, 144', 145, 145', 244, 244', 245, 245', 344, 344', 345, 345'), ladite cavité (146, 146', 246, 246', 346, 346') étant coupée par un plan longitudinal (P, P') passant par lesdites parois verticales (160, 160', 162, 162', 260, 260', 262, 262', 360, 360', 362, 362').

2. Corps longitudinal (114, 114', 214, 214', 314, 314') selon la revendication 1, dans lequel ladite au moins une cavité longitudinale (146, 146', 246, 246', 346, 346') s'étend de part et d'autre desdits moyens de maintien (140, 140', 240, 240', 340, 340') d'une lame d'essuyage (16) et/ou de retenue (142, 142', 242, 242', 342, 342') d'une vertèbre de rigidification (18).

3. Corps longitudinal (114, 114', 214, 214', 314, 314') selon la revendication 1 ou 2, dans lequel lesdits moyens (140, 140', 142, 142', 240, 240', 242, 242', 340, 340', 342, 342') définissent un premier logement (144, 144', 244, 244', 344, 344') de réception de la vertèbre (18) et un second logement (145, 145', 245, 245', 345, 345') de réception du talon de la lame (16), ladite au moins une cavité (146, 146', 246, 246', 346, 346') s'étendant sur au moins toute la hauteur de l'un desdits logements et éventuellement sur au moins une partie de la hauteur de l'autre desdits logements, la hauteur de chaque logement (144, 144', 145, 145', 244, 244', 245, 245', 344, 344', 345, 345') étant mesurée dans une direction sensiblement perpendiculaire audit plan (P, P').

4. Corps longitudinal (114, 114', 214, 214', 314, 314') selon la revendication 2 ou 3, dans lequel lesdits moyens comprennent au moins deux crochets longitudinaux (140, 140', 142, 142', 240, 240', 242, 242', 340, 340', 342, 342') et dans lequel ladite au moins une cavité (146, 146', 246, 246', 346, 346') s'étend au moins en partie entre l'un de ces crochets et une paroi latérale (136, 136', 236, 236', 336, 336') du corps.

5. Corps longitudinal (114, 114', 214, 214', 314, 314') selon la revendication 4, dans lequel chaque paroi latérale (136, 136', 236, 236', 336, 336') du corps a en section transversale une forme sensiblement en U, C ou V, dont l'ouverture est orientée vers une paroi latérale opposée (136, 136', 236, 236', 336, 336') du corps.

6. Corps longitudinal (114, 114', 214, 214', 314, 314') selon l'une des revendications précédentes, dans lequel le corps présente un plan longitudinal U de symétrie sensiblement perpendiculaire audit plan (P, P').

7. Corps longitudinal (114, 114', 214, 214', 314, 314') selon l'une des revendications précédentes, dans lequel une partie de la périphérie extérieure du corps, qui borde ladite au moins une cavité (146, 146', 246, 246', 346, 346'), forme un déflecteur aérodynamique (120, 120', 220, 220', 320, 320').

8. Corps longitudinal (114, 114', 214, 214', 314, 314') selon l'une des revendications précédentes, ce corps étant réalisé à partir d'un ou deux matériaux, par exemple par extrusion ou co-extrusion.

9. Corps longitudinal (114, 214, 314) selon l'une des revendications précédentes, dans lequel ledit logement (144, 244, 344) de réception de la vertèbre (18) communique avec ladite au moins une cavité (146, 246, 346).

10. Corps longitudinal (114', 214', 314') selon l'une des revendications 1 à 8, dans lequel ladite au moins une cavité (146', 246', 346') est isolée dudit logement (144', 244', 344') de réception de la vertèbre (18) et est configurée pour être alimentée en liquide lave glace.

11. Corps longitudinal (114', 214', 314') selon la revendication 10, ce corps comprenant des orifices (156', 256', 356') de pulvérisation de liquide lave glace, qui débouchent dans ladite au moins une cavité (146', 246', 346').

12. Corps longitudinal (114', 214', 314') selon la revendication 10 ou 11, dans lequel lesdits moyens comprennent des crochets (142', 242', 342') de retenue de la vertèbre, au moins un crochet de retenue de la vertèbre, de préférence chaque crochet de retenue de la vertèbre, étant relié à une paroi supérieure (138', 238', 338') ou latérale (136', 236', 336') du corps par au moins un voile longitudinal (154', 254', 354', A) d'isolation de ladite au moins une cavité (146', 246', 346').

13. Corps longitudinal (114, 114', 214, 214', 314, 314') selon l'une des revendications précédentes, dans lequel ladite au moins une cavité (146, 146', 246, 246', 346, 346') a en section transversale une base ou extrémité inférieure de plus grande largeur que son sommet ou extrémité supérieure.

14. Corps longitudinal (114, 114', 214, 214', 314, 314') selon l'une des revendications précédentes, ce corps ayant en section transversale une forme présentant deux parties, respectivement supérieure (130, 130', 230, 230', 330, 330') et inférieure (128, 128', 228, 228', 328, 328'), la partie supérieure étant sensiblement triangulaire et la partie inférieure étant sensiblement trapézoïdale ou hexagonale.

15. Balai (10) d'essuyage d'une vitre de véhicule, comprenant un corps longitudinal (114, 114', 214, 214', 314, 314') selon l'une quelconque des revendications précédentes, une lame d'essuyage (16) et une vertèbre de rigidification (18), ladite lame (16) ou ladite vertèbre (18) étant reçue dans ledit logement (144, 144', 145, 145', 244, 244', 245, 245', 344, 344', 345, 345').
